# FASCICULE DE BREVET EUROPEEN

(11) **EP 2 156 907 B1**
(45) Date de publication et mention de la délivrance du brevet: **14.01.2015**
(21) Numéro de dépôt: 09167853.2
(22) Date de dépôt: 13.08.2009
(51) Int. Cl.: B09C 1/00, E02D 3/12, E02F 3/06, E21B 7/26, E21B 21/00

(54) **Equipement et procédé de traitement de polluants dans le sol**
Einrichtung und Verfahren zur Bodensanierung
Equipment and process for treating pollutants in a soil

(30) Priorité: 20.08.2008 FR 0855641
(43) Date de publication de la demande: 24.02.2010
(73) Titulaire: Soletanche Freyssinet, 92500 Rueil Malmaison (FR)
(72) Inventeur: Ille, Christian, 92500, Rueil Malmaison (FR); Cornu, Michel, 92500, Rueil Malmaison (FR); Mathieu, Fabrice, 92500, Rueil Malmaison (FR); Esnault-Filet, Annette, 92500, Rueil Malmaison (FR)
(74) Mandataire: Balesta, Pierre

(56) Documents cités:
- EP-A- 0 441 169
- EP-A- 0 453 839
- GB-A- 2 301 134
- US-A- 4 834 194

## Description

La présente invention a pour objet un équipement de traitement de polluants dans le sol pour réaliser une réhabilitation de ce sol, y compris éventuellement des nappes souterraines, et un procédé de traitement du sol.

On connaît de nombreuses techniques qui sont utilisées pour traiter des sols pollués ou pour extraire de ces sols pollués des composés volatils polluants adsorbés ou absorbés par le sol.

Parmi ces différentes techniques, la demande de brevet européen EP 1 847 329 concerne l'utilisation d'un outil de forage qui sert à déstructurer le sol tout en permettant l'injection dans le sol de fluides et notamment de gaz sous pression capable de récupérer les composés volatils polluants par action mécanique et/ou par action chimique, ces composés volatils étant récupérés à la surface du sol par des moyens d'aspiration.

Plus précisément dans cette demande de brevet européen, deux outils de forage sont décrits. On trouve d'une part une machine d'excavation ayant une tête munie de deux fraises rotatives à axes horizontaux, la tête étant de plus équipée d'une buse d'injection de gaz. Cette tête de forage est descendue dans le sol jusqu'à la profondeur que l'on veut traiter. Les polluants volatils sont récupérés en partie supérieure par aspiration grâce à la désagrégation du sol et à l'injection de fluide sous pression.

Dans cette même demande de brevet européen, on décrit une deuxième machine qui consiste dans une chaîne sans fin équipée de dents de découpage du sol et munie de buses d'injection de gaz. Les composés volatils sont récupérés à la surface du sol par des moyens d'aspiration. Cet outil, dont la longueur utile correspond à la profondeur de sol à traiter, est déplacé horizontalement.

Ces techniques peuvent être très efficaces mais elles ne sont pas totalement adaptées dans certains types de sols. En effet, dans certains cas de figures, toute ou partie du fluide injecté dans le sol au niveau des fraises dans le cas du premier outil ou sur la longueur de la chaîne sans fin peut s'échapper dans le terrain environnant lorsque par exemple la perméabilité du terrain naturelle est proche de celle de la zone de terrain qui a fait l'objet du découpage et de la désagrégation à l'aide de l'outil. Il en résulte une mauvaise récupération des polluants volatils.

Le risque est d'autant plus important que la profondeur du volume de polluants à traiter augmente. En effet, soit on disperse le polluant sans véritablement le traiter en le remontant à la surface, soit les polluants extraits sont dispersés dans l'atmosphère à la surface du sol de manière incontrôlée.

Par ailleurs, le document US 4 834 194 décrit un équipement de traitement de sols selon le préambule de la revendication 1.

Un premier objet de la présente invention est de fournir un équipement de traitement de polluants dans le sol selon la revendication 1 qui permette une meilleure définition de la zone de traitement et donc une meilleure efficacité, ainsi qu'une plus grande fiabilité dans la récupération des polluants volatils.

On comprend que grâce à la présence des organes d'agitation du sol qui sont disposés sur toute la longueur utile, c'est-à-dire dans le sol, de l'âme tubulaire de l'outillage de traitement, le sol au moins dans la région qui entoure l'âme tubulaire est maintenu dans sa forme désagrégée, cette désagrégation initiale provenant bien sûr de l'action initiale de l'outil ou tête de forage et de malaxage. On maintient ainsi autour de l'âme de l'outillage une sorte de cheminée dans laquelle le sol reste désagrégé de façon importante, cette cheminée permettant la remontée des polluants volatils grâce à la combinaison de l'injection de gaz sous pression au niveau de la tête de forage et des moyens d'aspiration disposés à la surface du sol. On obtient ainsi une meilleure efficacité de la récupération des polluants et on évite que les polluants extraits du sol ne se retrouvent dans l'atmosphère. En effet, la cheminée constitue une voie privilégiée de remontée des effluents gazeux par rapport au reste du sol.

L'âme tubulaire de l'outillage de traitement comprend une pluralité de buses secondaires d'injection de fluide qui sont réparties régulièrement sur toute la longueur utile de l'âme de l'outil. Ces injections de gaz qui se produisent à des niveaux intermédiaires entre la tête de forage et la surface du sol aident à la remontée des polluants volatils vers la surface du sol.

De préférence, l'équipement de traitement est caractérisé en ce que lesdits organes d'agitation du sol comprennent un corps fixé sur ladite âme annulaire, ledit corps comprenant une extrémité radiale apte à redécouper le sol déjà découpé au moins par ledit outil de forage et de malaxage et au moins un évidement pour forcer le passage d'une partie du sol redécoupé sous l'action de la rotation de ladite âme.

Grâce aux caractéristiques particulières des organes d'agitation répartis sur la longueur de l'âme de l'outillage, on maintient effectivement autour de cette âme une cheminée de matériaux maintenus dans leur état désagrégé grâce à la combinaison des moyens de coupe que comprennent les organes d'agitation et des évidements prévus dans les corps de ces organes qui sont traversés par les éléments de sol redécoupés sous l'effet de la rotation de l'âme de l'outillage. On obtient ainsi effectivement un maintien à l'état désagrégé de la zone entourant l'âme de l'outillage et donc le maintien de la cheminée durant toute la phase de descente de l'outil.

Un second objet de l'invention est de fournir un procédé de traitement du sol qui peut, notamment mais non exclusivement, être mis en oeuvre à l'aide de l'équipement de traitement défini ci-dessus.

Le procédé de traitement se caractérise en ce qu'il comprend les étapes suivantes :
- on déplace en translation verticale l'outil de forage dans le sol à traiter sur la longueur de sol à traiter en laissant les matériaux découpés dans le forage ;
- on injecte dans le matériau déstructuré du forage un fluide sous pression pour extraire lesdits polluants du sol au moins lorsque l'outil de forage a atteint sa position basse,
- on aspire ledit fluide à la partie supérieure dudit forage ;
- on maintient sous forme déstructurée au moins une partie des matériaux découpés pour réaliser dans le forage une cheminée de matériau déstructuré apte à faciliter la remontée d'au moins une partie dudit fluide sous pression entraînant les polluants sous l'effet de l'aspiration, par quoi on réalise le traitement au sol.

De préférence, le traitement, c'est-à-dire l'injection, a lieu pendant la descente de l'outil, puis lorsque l'outil a atteint son point bas correspondant à la profondeur de traitement. Dans cette deuxième phase, l'outil est immobile en translation mais maintenu rotatif. Il est également possible de faire subir à l'outil des mouvements en translation verticale alternés.

De préférence, le procédé de traitement est caractérisé en ce que ladite aspiration et un étanchement du forage sont réalisés pendant les étapes de descente de l'outil de forage ou plus généralement de déplacement en translation verticale et de maintien de l'outil de forage en position basse.

De préférence encore, le procédé de traitement est caractérisé en ce qu'il comprend en outre, après l'étape de traitement du sol, une étape de consolidation du matériau déstructuré dans le forage consistant à compacter ledit matériau dans le forage et/ou à injecter dans le matériau un coulis et à mélanger celui-ci avec le matériau découpé.

D'autres caractéristiques et avantages de l'invention apparaîtront mieux à la lecture de la description qui suit de plusieurs modes de réalisation de l'invention donnés à titre d'exemples non limitatifs. La description se réfère aux figures annexées, sur lesquelles :
- la figure 1 est une vue en coupe verticale de l'ensemble de l'équipement en cours d'opération ;
- la figure 1A est une vue d'une portion de l'âme de l'outillage de traitement ;
- la figure 1B est une vue en perspective de cette même partie de l'âme de l'outillage de traitement ;
- la figure 2 est une vue en perspective de la tête de forage et de malaxage de l'outillage de traitement ;
- la figure 3 est une vue en perspective et en coupe de l'âme de l'outillage de traitement montrant en outre un premier type d'organes d'agitation ;
- la figure 4 est une vue en perspective montrant les organes de raccordement des tubes constituant l'âme tubulaire de l'outillage ;
- la figure 4A est une vue en coupe selon le plan A de la figure 4 ;
- la figure 5 est une vue en perspective de l'extrémité inférieure d'un des tubes constituant l'âme tubulaire de l'outillage montrant le deuxième type d'organes d'agitation ;
- la figure 6 est une vue en perspective d'une partie de l'organe d'agitation représenté sur la figure 5 ;
- la figure 7 est une vue en perspective montrant un premier mode d'étanchement de l'extrémité supérieure du forage à l'aide de volets mobiles ; et
- la figure 8 montre en coupe verticale un deuxième mode d'étanchement de l'extrémité supérieure du forage à l'aide d'un soufflet déformable.

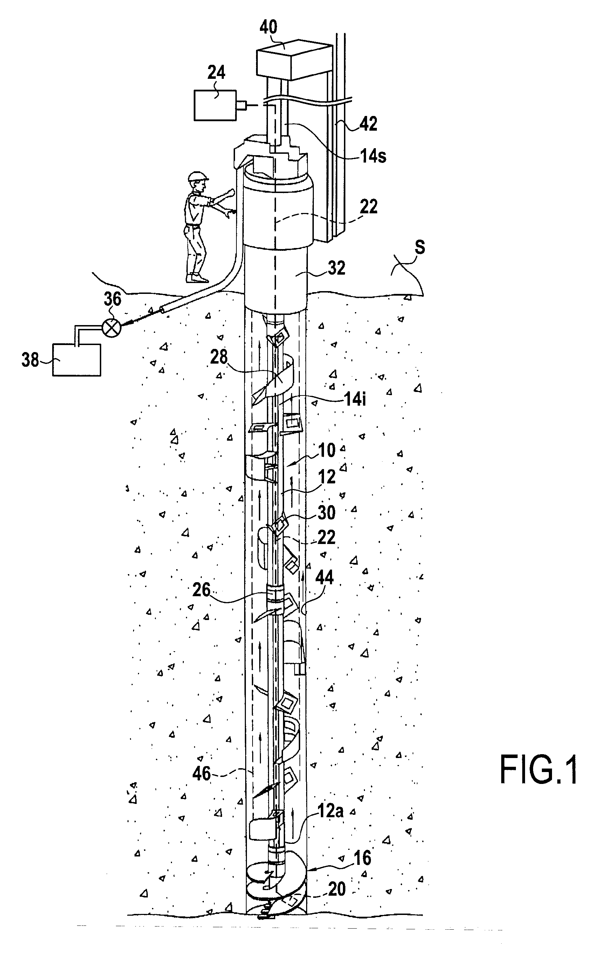

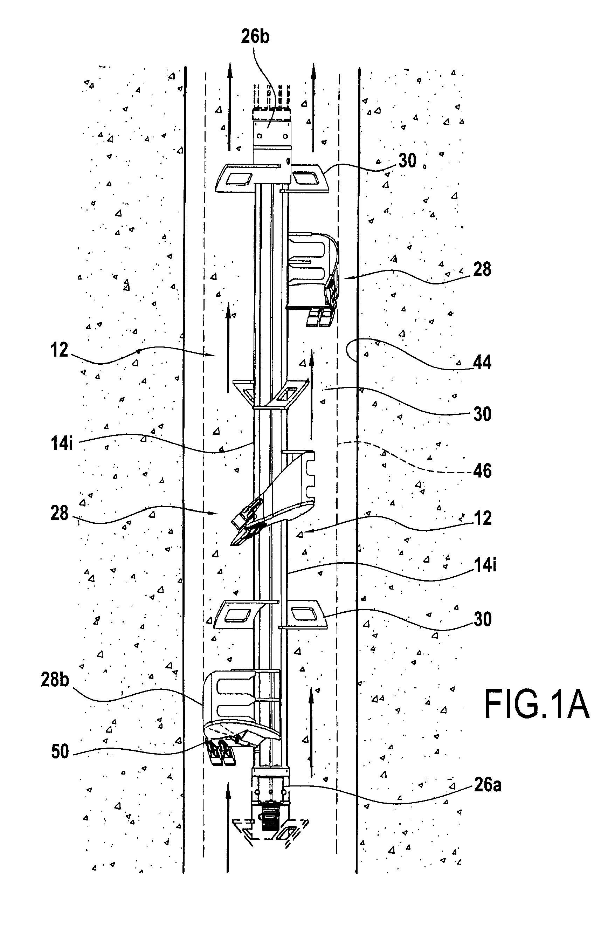

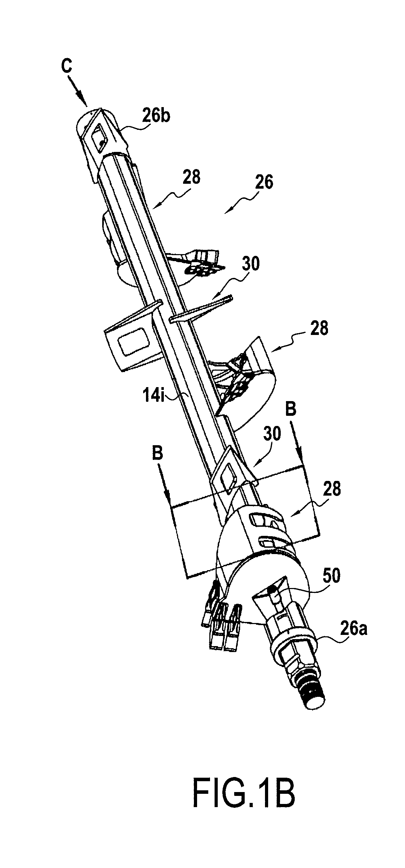

En se référant tout d'abord à la figure 1, on va décrire l'ensemble de l'équipement de traitement de polluants.

Cet équipement comprend un outillage de traitement 10 constitué par une âme rotative 12 formée de préférence par une pluralité de tubes tels que 14ᵢ. A l'extrémité inférieure 12a de l'âme 12 est montée une tête de forage et de malaxage 16. Outre ses fonctions habituelles, la tête de malaxage et de forage 16 est équipée d'une buse d'injection de gaz 20 qui est reliée par la conduite symbolisée par la référence 22 à une source 24 de fluide sous pression. Les différents tubes 14ᵢ sont reliés entre eux et rendus solidaires en rotation et en translation par des éléments d'accouplement tels que 26. Sur l'âme 12, donc sur les éléments de tube 14ᵢ, sont montés des organes d'agitation qui, dans le mode de réalisation préféré décrit, sont de deux types. Un premier type d'organes d'agitation est référencé 28 alors que le deuxième type d'organes d'agitation est référencé 30. Ces deux types préférés d'organes d'agitation seront décrits plus en détail ultérieurement. Il suffit d'indiquer que ces organes d'agitation sont montés sur chaque tube 14ᵢ de façon alternée selon la longueur du tube et angulairement décalés autour de l'axe de ce même tube.

On voit que ces organes d'agitation sont distincts les uns des autres, c'est-à-dire qu'ils sont discontinus selon la longueur de l'âme de l'outil, chacun d'entre eux s'étendant sur une longueur réduite de l'âme 12.

L'outillage de traitement comporte également à sa partie supérieure, disposée à la surface du sol, une enveloppe sensiblement étanche 32 destinée à récupérer les effluents volatils extraits du sol. Cette enveloppe 32 doit bien sûr laisser passer les tubes supérieurs 14s de l'âme de l'outillage. L'enveloppe 32 est munie d'une conduite d'aspiration 34 reliée à des moyens de pompage au vide 36 permettant de récupérer les effluents gazeux dans une cuve de stockage telle que 38 ou dans une unité de traitement.

L'outillage comprend également une tête de mise en rotation de l'âme 12 de l'outillage 10 référencée 40, cette tête de mise en rotation étant guidée en déplacement vertical par un mât 42, ainsi que cela est bien connu.

De préférence, l'enveloppe 32 est rendue étanche par des moyens d'étanchement qui doivent permettre le passage de l'âme 18 avec ses organes d'agitation 28 et 29.

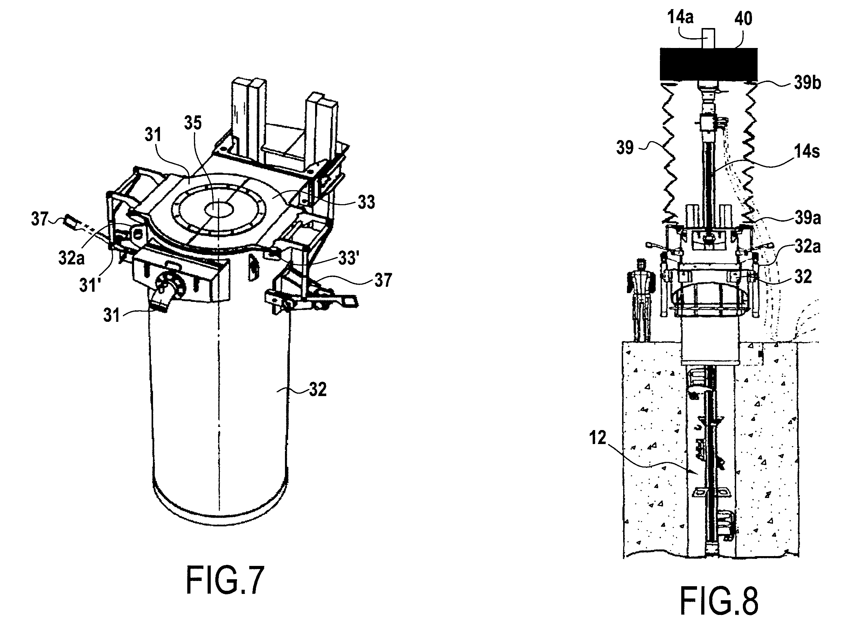

Une première solution, représentée sur la figure 7, consiste à prévoir au sommet 32a de l'enveloppe 32 deux volets pivotants 31 et 33 articulés autour des axes 31' et 33'. Chaque volet comprend un orifice central semi-circulaire 35 ayant sensiblement le même diamètre que l'âme 18. Durant la phase de descente de l'outil, les volets sont en position relevée et les organes d'agitation peuvent traverser l'enveloppe 32. Lors de la phase pendant laquelle l'âme 18 est immobile en translation, les volets sont rabattus en position d'obturation et maintenus dans cette position par des moyens de verrouillage tels que 37.

Une deuxième solution, représentée sur la figure 8, permet de réaliser l'étanchement du forage, y compris lorsque l'outil de forage est déplacé en translation verticale.

Les moyens d'étanchement sont constitués par un soufflet élastique 39 dont une première extrémité 39a est solidaire de l'extrémité supérieure 32a de l'enveloppe 32 et dont la deuxième extrémité 39b est solidaire de la tête de forage 40.

L'utilisation de l'outillage 10 qui vient d'être décrit est la suivante :
Après avoir amorcé le forage 44 à l'aide de la tête de forage 16, on met en place l'enveloppe étanche 32 à la surface du sol S et on commande la pompe d'aspiration 36. La tête de forage et de malaxage 16 réalise de façon classique le forage cylindrique 44 au fur et à mesure de sa descente dans le sol. La buse d'injection 20 injecte dans le sol ainsi découpé et malaxé un gaz sous pression qui peut être un gaz inerte. Si nécessaire, pour augmenter l'efficacité de la pénétration, on peut injecter un liquide. Au fur et à mesure de la rotation de la tête de forage 16 et de sa pénétration dans le sol, les organes d'agitation 28 et 30 maintiennent au moins la portion du sol dans le forage entourant l'âme 12 de l'outillage dans un état de désagrégation important. On a symbolisé par les pointillés 46 cette zone qui constitue "une cheminée". Grâce à l'injection de gaz sous pression par la buse 20 à l'extrémité inférieure du forage à son stade de réalisation, et à l'aspiration réalisée par l'enveloppe 32 en partie supérieure du forage, les effluents volatils extraits par le gaz sous pression dans le sol découpé correspondant au forage remontent beaucoup plus aisément vers la surface du sol à l'intérieur de la cheminée 46. On obtient donc d'une part un "guidage" des effluents volatils extraits par le gaz sous pression à l'intérieur du forage, quelle que soit la nature du sol environnant, et on récupère effectivement tous ces effluents volatils au niveau de l'enveloppe étanche 32. Le gaz injecté peut être inerte ou comprendre un composé chimiquement actif.

Ainsi qu'on l'a déjà indiqué, le traitement du sol, c'est-à-dire l'injection du fluide sous pression, peut être réalisé pendant la descente de l'outil de forage et pendant qu'il est maintenu dans sa position basse au fond du forage. Dans cette dernière étape, l'outil est bien sûr maintenu rotatif. On pourrait également ne commencer l'injection que lorsque l'outil a atteint sa position basse. Il est également possible de réaliser l'injection lorsque l'outil est déplacé en translation verticale de façon alternée.

En se référant maintenant aux figures 1A et 1B, on va décrire plus en détail un tube 14ᵢ constituant l'âme tubulaire de l'outillage selon un mode préféré de réalisation de l'invention. Sur cette figure, on a représenté les connecteurs mécaniques femelle 26a et mâle 26b disposés à chaque extrémité du tube ainsi que les organes d'agitation 28 et 30. Comme le montrent ces figures, l'organe d'agitation inférieur 28b est équipé en outre d'une buse auxiliaire d'injection 50 s'étendant selon une direction sensiblement radiale par rapport à l'axe du tube. Si l'on considère l'ensemble de l'âme tubulaire de l'outillage dans ce mode de réalisation préféré, on comprend que, outre la buse d'injection principale 20 disposée au niveau de la tête de forage 16, on trouve une buse d'injection secondaire de fluide sous pression 50 à l'extrémité de chaque tube 14ᵢ, ces buses d'injection étant donc régulièrement réparties sur la longueur utile de l'âme 12 de l'outillage.

Ces buses secondaires qui créent un jet de gaz à des niveaux intermédiaires entre la tête de forage 16 et la surface du sol améliorent très sensiblement l'effet d'entraînement pour la remontée des effluents volatils vers l'enveloppe de récupération 32.

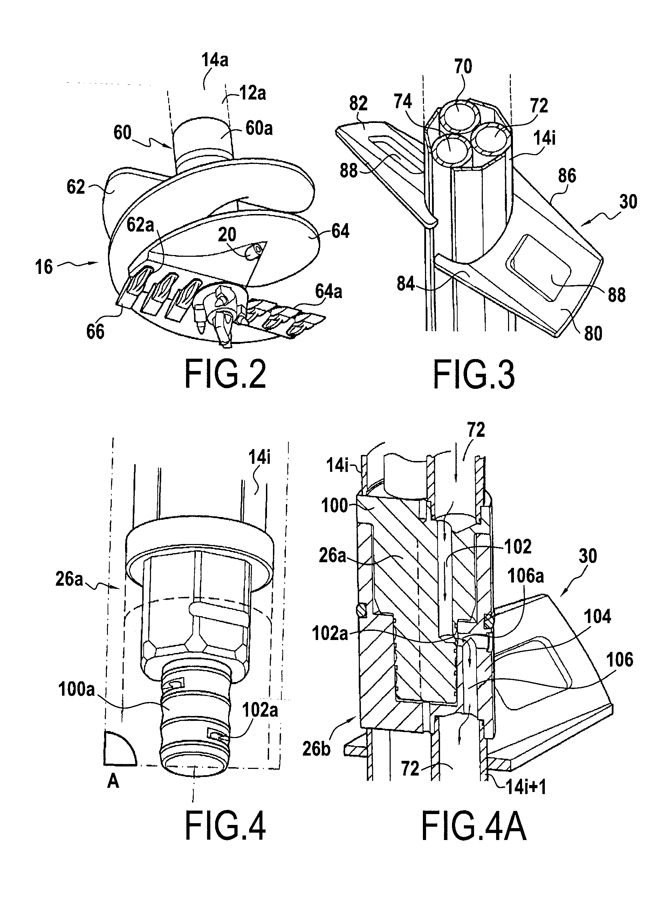

Sur la figure 2, on a représenté un mode préféré de réalisation de la tête de forage et de malaxage 16. Celle-ci comporte un arbre 60 dont l'extrémité supérieure 60a est raccordée à l'extrémité inférieure du tube inférieur 14a de telle manière que le mouvement de rotation transmis par les tubes soit appliqué à la tête de forage. Cette tête de forage comprend une première pale 62 en forme d'hélice faisant saillie hors de l'arbre 60 ainsi qu'une deuxième pale 64 décalée de 180 degrés. Les bords d'attaque 62a et 64a des deux pales sont équipés de dents telles que 66. L'extrémité inférieure de l'arbre 60 de la tête de forage est également équipée d'ergots de forage 68. Lorsque la tête de forage 16 est entraînée en rotation dans un premier sens, la tête de forage réalise le découpage et la désagrégation du sol de manière classique. Grâce à sa conformation particulière, lorsque la tête de forage est entraînée dans le sens inverse, lors de la remontée de la tête de forage, les pales 62 et 64 réalisent un effet de compactage du sol qui facilite la remise en état de celui-ci.

Sur la figure 3, on a représenté en coupe partielle un tube 14ᵢ pour montrer que ce tube creux comprend trois conduites d'alimentation en gaz sous pression respectivement référencées 70, 72 et 74. Ces conduites servent à alimenter de façon indépendante la buse principale d'injection 20 et chacune des buses d'injection secondaires 50. Grâce à cette alimentation séparée des différentes buses, on peut maîtriser au niveau de chaque buse la pression du gaz effectivement injecté et éviter les risques de bouchage de buses.

En outre, grâce à l'indépendance des circuits d'alimentation des buses, il est possible d'injecter par les buses 20 et 50 des fluides sous pression différents dont certains pourraient être actifs, ou des fluides sous des pressions différentes.

Une des buses, en fin de traitement, pourrait être utilisée pour injecter un coulis faisant prise pour redonner au sol déstructuré ses caractéristiques proches des caractéristiques initiales, ou améliorées.

Sur cette figure 3, on a représenté également l'organe d'agitation du deuxième type référencé 30. Cet organe est constitué par deux plaques 80 et 82 qui s'étendent radialement par rapport au tube 14ᵢ et qui sont inclinées par rapport à ce même axe. Chaque pale 80, 82 comporte une partie principale inclinée et deux bords 84 et 86 qui sont orthogonaux à l'axe du tube 14ᵢ. De plus, les plaques 80 et 82 constituant ces outils sont munies d'un orifice 88. On comprend qu'ainsi les bords 84 et 86 constituent d'une certaine manière des éléments de redécoupe du sol déjà malaxé par la tête de découpe 16 et par la rotation des outils 30, le sol est forcé à passer par les orifices 88, ce qui tend à le maintenir dans son état de désagrégation permettant ainsi la remontée des effluents volatils par la cheminée 46 sans générer de transport vertical du sol.

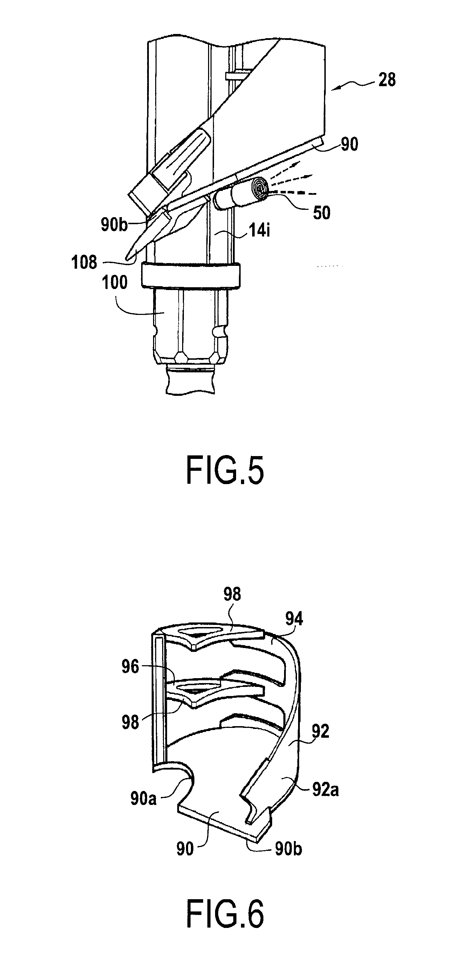

Sur les figures 5 et 6, on a représenté le premier type d'organes d'agitation 28. Cet organe a une forme générale en portion de cercle, il comprend une plaque inférieure 90 fixée par son bord 90a sur le tube 14ᵢ et une paroi latérale 92 sensiblement parallèle à l'axe du tube 14ᵢ. Cette paroi comporte une partie pleine 92a et une partie partiellement évidée formant des dents 94. L'organe d'agitation 28 comporte également des éléments de redécoupe tels que 96 et 98 qui ménagent entre eux des espaces, ces éléments 96 et 98 ayant une forme "de soc de charrue". Le bord d'attaque 90b de la plaque 90 est équipé de préférence de dents 108.

On comprend que ce premier type d'outil d'organes d'agitation 28 fonctionne différemment du deuxième par les différences de ces organes de redécoupe et la définition des évidements qu'il comporte. Combiné avec l'action des organes d'agitation 30, il permet effectivement de maintenir dans un état désagrégé la partie 46 du forage 44 qui entoure l'âme tubulaire de l'outillage de traitement.

Il va cependant de soi que d'autres types d'organes d'agitation pourraient être utilisés ou encore que tous les organes d'agitation pourraient être identiques.

Sur les figures 4 et 4A, on a représenté un mode préféré de réalisation des raccords 26a et 26b entre les tubes 14ᵢ. Ces raccords doivent non seulement assurer la liaison mécanique entre les tubes mais assurer aussi la continuité des conduites 70, 72 et 74 montées dans chaque tube. Pour cela, le corps 100 du raccord mâle 26a comporte un passage 102 prolongeant la conduite 72 du tube 14ᵢ. L'extrémité 102a du passage débouche dans la face externe 100a du corps 100 du raccord.

Le corps 94 du raccord femelle 26b comporte également un passage 106 raccordé à la conduite 72 du tube 14ᵢ₊₁.

L'autre extrémité 106a du passage 106 débouche dans la face interne 104a du corps 104 du raccord femelle 26b en regard de l'extrémité 102a du passage 102 du connecteur mâle. Bien entendu sur chaque tube 14ᵢ, une des conduites est directement raccordée à la buse d'injection secondaire 50 portée par le tube.

## Revendications

1. Equipement de traitement de polluants dans le sol, comprenant un outillage de traitement de sol (10) comportant :
- une âme (12) tubulaire ayant un axe longitudinal et une extrémité inférieure (12a) ;
- un outil de forage et de malaxage rotatif (16) solidaire en rotation de l'extrémité inférieure de l'âme ;
- des moyens (40) de mise en rotation de l'âme tubulaire autour de son axe ;
- une pluralité d'organes d'agitation du sol (28, 30) découpé montés selon la longueur de l'âme tubulaire et solidaires de celle-ci en rotation pour maintenir sous forme déstructurée au moins la portion du forage entourant l'âme, lesdits organes d'agitation étant distincts les uns des autres ;
- au moins une buse principale d'injection (20) dans le sol d'un fluide sous pression, montée à l'extrémité inférieure de ladite âme tubulaire ;
- des moyens disposés dans ladite âme pour alimenter ladite buse d'injection en fluide sous pression ;
- des moyens d'aspiration (34, 36) du fluide disposés à la partie supérieure du forage en cours de réalisation ; et
- des moyens d'étanchement (31, 33, 39) de l'extrémité supérieure du forage ;
par quoi ledit fluide sous pression remonte par la zone du forage entourant l'âme et maintenue déstructurée par lesdits organes d'agitation en entraînant lesdits polluants, l'âme tubulaire (12) comprenant en outre une pluralité de buses secondaires d'injection de fluide (50) disposées entre son extrémité supérieure et son extrémité inférieure, ledit équipement comprenant en outre au moins une source de fluide sous pression (24), et étant **caractérisé en ce que** lesdits moyens d'alimentation en fluide sous pression comprennent une pluralité de conduites (70, 72, 74) disposées dans ladite âme tubulaire, chaque conduite ayant une extrémité supérieure raccordée à ladite source de fluide sous pression et une extrémité inférieure raccordée à une desdites buses d'injection.

2. Equipement de traitement selon la revendication 1, **caractérisé en ce que** lesdits organes d'agitation sont régulièrement répartis selon la longueur de ladite âme tubulaire (12).

3. Equipement de traitement selon l'une quelconque des revendications 1 et 2, **caractérisé en ce que** ladite âme tubulaire (12) est constituée par une pluralité d'éléments tubulaires (14i) raccordés entre eux par des organes d'accouplement en rotation et en translation et **en ce que** ledit outil de forage est solidaire de l'extrémité inférieure de l'élément tubulaire inférieur.

4. Equipement de traitement selon la revendication 3, **caractérisé en ce qu'**au moins certains des éléments tubulaires de l'âme tubulaire comprennent à proximité de leur extrémité inférieure une buse secondaire d'injection (50) et **en ce que** ladite buse principale (20) est montée sur l'outil de forage.

5. Equipement selon l'une quelconque des revendications 1 à 4, **caractérisé en ce que** lesdits moyens d'aspiration comprennent une enceinte (32) sensiblement étanche disposée à l'extrémité supérieure du forage et un système de pompage au vide (36).

6. Equipement selon la revendication 5, **caractérisé en ce qu'**il comprend en outre une conduite de récupération (34) du fluide aspiré dans ladite enceinte et des moyens de traitement du fluide récupéré.

7. Equipement de traitement selon l'une quelconque des revendications 1 à 6, **caractérisé en ce que** ledit outil de forage et de malaxage comprend une pale (62, 64) fixée sur la face externe d'une portion d'arbre axial, ladite pale étant configurée pour produire un effet de forage pour un premier sens de rotation de l'âme tubulaire et un effet de compactage pour l'autre sens de rotation de l'âme tubulaire.

8. Equipement de traitement selon l'une quelconque des revendications 1 à 7, **caractérisé en ce qu'**il comprend en outre des moyens de guidage vertical et de déplacement vertical des moyens de mise en rotation de ladite âme tubulaire.

9. Equipement de traitement selon l'une quelconque des revendications 1 à 8, **caractérisé en ce que** lesdits organes d'agitation (28) du sol comprennent un corps (80, 82) fixé sur ladite âme annulaire, ledit corps comprenant une extrémité radiale apte à redécouper le sol déjà découpé au moins par ledit outil de forage et de malaxage et au moins un évidement (88) pour forcer le passage d'une partie du sol redécoupé sous l'action de la rotation de ladite âme.

10. Equipement selon l'une quelconque des revendications 1 à 9, **caractérisé en ce que** les moyens d'étanchement de la partie supérieure du forage comprend des volets mobiles (31, 36) aptes à obturer l'extrémité du forage lorsque l'outil de forage et de malaxage n'est pas animé d'un mouvement de translation.

11. Equipement selon l'une quelconque des revendications 1 à 10, **caractérisé en ce que** lesdits moyens d'étanchement de la partie supérieure du forage comprennent des moyens formant soufflet (39) dont une extrémité est solidaire des moyens de mise en rotation de l'outil de forage et dont l'autre extrémité est solidaire de la périphérie de l'extrémité supérieure du forage.

12. Procédé de traitement de polluants dans le sol, **caractérisé en ce qu'**il comprend les étapes suivantes :
- on fournit un équipement de traitement selon l'une quelconque des revendications 1 à 11 ;
- on déplace en translation verticale l'outil de forage dans le sol à traiter sur la longueur de sol à traiter en laissant les matériaux découpés dans le forage ;
- on injecte dans le matériau déstructuré du forage un fluide sous pression pour extraire lesdits polluants du sol au moins lorsque l'outil de forage a atteint sa position basse ;
- on aspire ledit fluide à la partie supérieure dudit forage ;
- on maintient sous forme déstructurée au moins une partie des matériaux découpés pour réaliser dans le forage une cheminée de matériau déstructuré apte à faciliter la remontée d'au moins une partie dudit fluide sous pression entraînant les polluants sous l'effet de l'aspiration, par quoi on réalise le traitement sur sol.

13. Procédé de traitement selon la revendication 12, **caractérisé en ce que** ladite aspiration et un étanchement du forage sont réalisés pendant les étapes de déplacement en translation verticale de l'outil de forage et de maintien de l'outil de forage en position basse.

14. Procédé de traitement, selon l'une quelconque des revendications 12 et 13, **caractérisé en ce qu'**il comprend en outre, après l'étape de traitement du sol, une étape de consolidation du matériau déstructuré dans le forage consistant à compacter ledit matériau dans le forage et/ou à injecter dans le matériau un coulis et à mélanger celui-ci avec le matériau découpé.

15. Procédé selon l'une quelconque des revendications 12 à 14, **caractérisé en ce que** ladite injection de fluide sous pression a lieu lorsque l'outil de forage a atteint sa position la plus basse.

16. Procédé selon la revendication 15, **caractérisé en ce que** ladite injection de fluide sous pression a lieu également lors du ou des déplacement(s) en translation verticale de l'outil de forage.

## Patentansprüche

1. Einrichtung zur Behandlung von Schadstoffen im Boden, umfassend ein Bodenbehandlungsgerät (10), das umfasst:
- einen rohrförmigen Kern (12), der eine Längsachse und ein unteres Ende (12a) aufweist,
- ein umlaufendes Bohr- und Knetwerkzeug (16), das mit dem unteren Ende des Kerns drehfest ist,
- Mittel (40) zum Indrehungversetzen des rohrförmigen Kerns um seine Achse,
- eine Vielzahl von Organen zum Umrühren des zerteilten Bodens (28, 30), die entlang der Länge des rohrförmigen Kerns angebracht und mit diesem drehfest sind, um wenigstens den den Kern umgebenden Abschnitt der Bohrung in strukturaufgelöster Form zu halten, wobei die Rührorgane voneinander getrennt sind,
- wenigstens eine Hauptdüse zum Einspritzen (20) eines Druckfluids in den Boden, die an dem unteren Ende des rohrförmigen Kerns angebracht ist,
- Mittel, die in dem Kern angeordnet sind, um die Einspritzdüse mit Druckfluid zu beaufschlagen,
- Mittel zum Absaugen (34, 36) des Fluids, die an dem oberen Teil der in Bildung befindlichen Bohrung angeordnet sind, und
- Mittel zum Abdichten (31, 33, 39) des oberen Endes der Bohrung,
wodurch das Druckfluid über den Bereich der Bohrung, der den Kern umgibt und der durch die Rührorgane strukturaufgelöst gehalten wird, unter Mitnahme der Schadstoffe wieder nach oben gelangt, wobei der rohrförmige Kern (12) ferner eine Vielzahl von Nebendüsen zum Einspritzen von Fluid (50) umfasst, die zwischen seinem oberen Ende und seinem unteren Ende angeordnet sind, wobei die Einrichtung ferner wenigstens eine Druckfluidquelle (24) umfasst und **dadurch gekennzeichnet ist, dass** die Mittel zur Beaufschlagung mit Druckfluid eine Vielzahl von Leitungen (70, 72, 74), welche in dem rohrförmigen Kern angeordnet sind, umfassen, wobei jede Leitung ein oberes Ende, das mit der Druckfluidquelle verbunden ist, und ein unteres Ende, das mit einer der Einspritzdüsen verbunden ist, aufweist.

2. Behandlungseinrichtung nach Anspruch 1, **dadurch gekennzeichnet, dass** die Rührorgane entlang der Länge des rohrförmigen Kerns (12) gleichmäßig verteilt sind.

3. Behandlungseinrichtung nach einem der Ansprüche 1 und 2, **dadurch gekennzeichnet, dass** der rohrförmige Kern (12) von einer Vielzahl von rohrförmigen Elementen (14i) gebildet ist, die durch Dreh- und Verschiebekupplungsorgane untereinander verbunden sind, und dass das Bohrwerkzeug mit dem unteren Ende des unteren rohrförmigen Elements fest verbunden ist.

4. Behandlungseinrichtung nach Anspruch 3, **dadurch gekennzeichnet, dass** wenigstens einige der rohrförmigen Elemente des rohrförmigen Kerns in der Nähe ihres unteren Endes eine Nebeneinspritzdüse (50) umfassen und dass die Hauptdüse (20) an dem Bohrwerkzeug angebracht ist.

5. Einrichtung nach einem der Ansprüche 1 bis 4, **dadurch gekennzeichnet, dass** die Absaugmittel einen im Wesentlichen dichten Raum (32), der an dem oberen Ende der Bohrung angeordnet ist, sowie ein Vakuumpumpsystem (36) umfassen.

6. Einrichtung nach Anspruch 5, **dadurch gekennzeichnet, dass** sie ferner eine Leitung zum Auffangen (34) des in den Raum gesaugten Fluids sowie Mittel zur Behandlung des aufgefangenen Fluids umfasst.

7. Behandlungseinrichtung nach einem der Ansprüche 1 bis 6, **dadurch gekennzeichnet, dass** das Bohr- und Knetwerkzeug eine Schaufel (62, 64) umfasst, die an der Außenseite eines Axialwellenabschnitts befestigt ist, wobei die Schaufel dazu ausgelegt ist, eine Bohrwirkung für eine erste Drehrichtung des rohrförmigen Kerns und eine Verdichtungswirkung für die andere Drehrichtung des rohrförmigen Kerns zu erzeugen.

8. Behandlungseinrichtung nach einem der Ansprüche 1 bis 7, **dadurch gekennzeichnet, dass** sie ferner Mittel zum vertikalen Führen und zum vertikalen Bewegen der Mittel zum Indrehungversetzen des rohrförmigen Kerns umfasst.

9. Behandlungseinrichtung nach einem der Ansprüche 1 bis 8, **dadurch gekennzeichnet, dass** die Organe zum Umrühren (28) des Bodens einen an dem ringförmigen Kern befestigten Körper (80, 82) umfassen, wobei der Körper ein radiales Ende, welches geeignet ist, den bereits wenigstens durch das Bohr- und Knetwerkzeug zerteilten Boden erneut zu zerteilen, sowie wenigstens eine Ausnehmung (88) umfasst, um den Durchgang eines Teils des erneut zerteilten Bodens unter der Wirkung der Rotation des Kerns zu forcieren.

10. Einrichtung nach einem der Ansprüche 1 bis 9, **dadurch gekennzeichnet, dass** die Mittel zum Abdichten des oberen Teils der Bohrung bewegliche Klappen (31, 36) umfassen, die geeignet sind, das Ende der Bohrung zu verschließen, wenn das Bohrund Knetwerkzeug nicht verschiebebewegt wird.

11. Einrichtung nach einem der Ansprüche 1 bis 10, **dadurch gekennzeichnet, dass** die Mittel zum Abdichten des oberen Teils der Bohrung einen Balg bildende Mittel (39) umfassen, deren eines Ende mit den Mitteln zum Indrehungversetzen des Bohrwerkzeugs fest verbunden ist und deren anderes Ende mit dem Umfang des oberen Endes der Bohrung fest verbunden ist.

12. Verfahren zur Behandlung von Schadstoffen im Boden, **dadurch gekennzeichnet, dass** es die folgenden Schritte umfasst:
- es wird eine Behandlungseinrichtung nach einem der Ansprüche 1 bis 11 bereitgestellt,
- das Bohrwerkzeug wird in dem zu behandelnden Boden über die zu behandelnde Bodenlänge vertikal verschiebebewegt, wobei die zerteilten Materialien in der Bohrung gelassen werden,
- in das strukturaufgelöste Material der Bohrung wird ein Druckfluid eingeleitet, um die Schadstoffe aus dem Boden abzuziehen, wenigstens wenn das Bohrwerkzeug seine untere Position erreicht hat,
- das Fluid wird am oberen Teil der Bohrung abgesaugt,
- wenigstens ein Teil der zerteilten Materialien wird in strukturaufgelöster Form gehalten, um in der Bohrung einen Schacht von strukturaufgelöstem Material auszubilden, der geeignet ist, die Aufwärtsbewegung wenigstens eines Teils des Druckfluids, das die Schadstoffe unter der Saugwirkung mitnimmt, zu erleichtern, wodurch die Behandlung am Boden durchgeführt wird.

13. Behandlungsverfahren nach Anspruch 12, **dadurch gekennzeichnet, dass** das Absaugen und ein Abdichten der Bohrung während der Schritte der vertikalen Verschiebebewegung des Bohrwerkzeugs und des Haltens des Bohrwerkzeugs in der unteren Position durchgeführt werden.

14. Behandlungsverfahren nach einem der Ansprüche 12 und 13, **dadurch gekennzeichnet, dass** es ferner nach dem Schritt der Bodenbehandlung einen Schritt zur Verfestigung des strukturaufgelösten Materials in der Bohrung umfasst, der darin besteht, das Material in der Bohrung zu verdichten und/oder in das Material einen Brei einzuleiten und diesen mit dem zerteilten Material zu vermischen.

15. Verfahren nach einem der Ansprüche 12 bis 14, **dadurch gekennzeichnet, dass** das Einleiten von Druckfluid stattfindet, wenn das Bohrwerkzeug seine unterste Position erreicht hat.

16. Verfahren nach Anspruch 15, **dadurch gekennzeichnet, dass** das Einleiten von Druckfluid auch während der Vertikalverschiebebewegung oder -bewegungen des Bohrwerkzeugs stattfindet.

## Claims

1. Equipment for treating pollutants in the ground, comprising ground treatment tooling (10) comprising:
• a tubular core (12) having a longitudinal axis and a bottom end (12a);
• a rotary drilling and mixing tool (16) constrained to rotate with the bottom end of the core;
• means (40) for rotating the tubular core about its axis;
• a plurality of ground-stirring members (28, 30) for stirring cut ground that are mounted along the length of the tubular core and secured to rotate therewith in order to keep at least a portion of the borehole surrounding the core in destructured form, said stirring members being distinct from one another;
• at least one main injector nozzle (20) for injecting a fluid under pressure into the ground and mounted at the bottom end of said tubular core;
• means arranged in said core to feed said injector nozzle with fluid under pressure;
• suction means (34, 36) for sucking up the fluid and arranged at the top portion of the borehole being made; and
• sealing means (31, 33, 39) for sealing the top end of the borehole;
whereby said fluid under pressure rises via the zone of the borehole surrounding the core and maintained in a destructured state by said stirring members while entraining said pollutants, the tubular core (12) further comprising a plurality of secondary fluid injector nozzles (50) arranged between its top end and its bottom end, said equipment further comprising at least one source (24) of fluid under pressure, and being **characterized in that** said means for feeding fluid under pressure comprise a plurality of pipes (70, 72, 74) arranged in said tubular core, each pipe having a top end connected to said source of fluid under pressure and a bottom end connected to one of said injector nozzles.

2. Treatment equipment according to claim 1, **characterized in that** said stirring members are regularly distributed along said tubular core (12).

3. Treatment equipment according to claim 1 or claim 2, **characterized in that** said tubular core (12) is constituted by a plurality of tubular elements (14i) connected together by coupling elements for providing coupling in rotation and in translation, and **in that** said drilling tool is secured to the bottom end of the bottom tubular element.

4. Treatment equipment according to claim 3, **characterized in that** at least some of the tubular elements of the tubular core include respective secondary injector nozzles (50) in the proximity of their bottom ends, and **in that** said main nozzle (20) is mounted on the drilling tool.

5. Equipment according to any one of claims 1 to 4, **characterized in that** said suction means comprise both a substantially leaktight enclosure (32) arranged at the top end of the borehole and a vacuum pumping system (36).

6. Equipment according to claim 5, **characterized in that** it further includes a recovery pipe (34) for recovering the fluid sucked into said enclosure and means for treating the recovered fluid.

7. Treatment equipment according to any one of claims 1 to 6, **characterized in that** said drilling and mixing tool includes a blade (62, 64) fastened to the outside face of an axial shaft portion, said blade being configured to produce a drilling effect in a first direction of rotation of the tubular core, and a compacting effect in the other direction of rotation of the tubular core.

8. Treatment equipment according to any one of claims 1 to 7, **characterized in that** it further includes means for vertically guiding and vertically moving means for driving rotation of said tubular core.

9. Treatment equipment according to any one of claims 1 to 8, **characterized in that** each of said ground stirring members (28) comprises a body (80, 82) fastened to said annular core, said body having a radial end suitable for recutting ground that has already been cut at least by said drilling and mixing tool, and at least one recess (88) for forcing a portion of the recut ground to pass under drive from the rotation of said core.

10. Equipment according to any one of claims 1 to 9, **characterized in that** the means for sealing the top portion of the borehole comprise movable flaps (31, 36) suitable for shutting the end of the borehole when the drilling and mixing tool is not moving in translation.

11. Equipment according to any one of claims 1 to 10, **characterized in that** said means for sealing the top portion of the borehole comprise bellows-forming means (39) having one end secured to the means for driving rotation of the drilling tool and having the other end secured to the periphery of the top end of the borehole.

12. A method of treating pollutants in the ground, the method being **characterized in that** it comprises the following steps:
• providing treatment equipment according to any one of claims 1 to 11;
• moving the drilling tool vertically in translation in the ground for treatment over the length of the ground for treatment while leaving cut material in the borehole;
• injecting a fluid under pressure into the destructured material of the borehole in order to extract said pollutants from the ground, at least when said drilling tool has reached its low position;
• sucking up said fluid at the top portion of said borehole; and
• maintaining at least a portion of the cut material in destructured form so as to provide a destructured material chimney in the borehole suitable for facilitating raising at least a portion of said fluid under pressure that entrains the pollutants under the effect of the suction, thereby treating the ground.

13. A treatment method according to claim 12, **characterized in that** both said suction and also sealing of the borehole are performed during steps of moving the drilling tool vertically in translation and of maintaining the drilling tool in its low position.

14. A treatment method according to claim 12 or claim 13, **characterized in that**, after the step of treating the ground, it includes a step of consolidating the destructured material in the borehole, which step consists in compacting said material in the borehole and/or in injecting a slurry into the material and mixing it with the cut material.

15. A method according to any one of claims 12 to 14, **characterized in that** said injection of fluid under pressure takes place when the drilling tool has reached its lowest position.

16. A method according to claim 15, **characterized in that** said injection of fluid under pressure also takes place while the drilling tool is moving vertically in translation.
